# EUROPEAN PATENT SPECIFICATION

(11) **EP 0 150 080 B1**
(45) Date of publication and mention of the grant of the patent: **11.05.1994**
(21) Application number: 85200040.5
(22) Date of filing: 17.01.1985
(51) Int. Cl.: A01B 29/04

(54) **Soil cultivating implements**
Bodenbearbeitungsgeräte
Machine pour le travail du sol

(30) Priority: 19.01.1984 NL 8400171
(43) Date of publication of application: 31.07.1985
(60) Divisional application: 88201533.2
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- EP-A- 0 064 115
- EP-A- 0 081 271
- EP-A- 0 088 659
- CH-A- 137 968
- DE-A- 2 462 240
- DE-C- 239 009
- DE-U- 8 026 581
- FR-A- 2 372 583
- FR-A- 2 445 096
- US-A- 1 645 994
- US-A- 1 916 330
- US-A- 2 667 362

## Description

The invention relates to a soil cultivating implement comprising a profiled ground roller with radially protruding parts and a plurality of scrapers which are located at the rear end of the roller relative to the intended direction of operative travel of the implement, which scrapers are active between said protruding parts of the roller, the implement further comprising a lever mechanism with a lever which is rotatable about a pivotal axis relative to the frame of the implement and which carries said plurality of scrapers, said lever mechanism further permitting said plurality of scrapers in common to be moved either closer to or further away from the roller surface.

A soil cultivating implement of the kind set forth is known from the US-A-1 645 994.

With the known construction at the rear of the roller with respect to the direction of travel, a plurality of scrapers is arranged which scrapers are carried by arms which are inclined rearwardly with respect to the direction of travel and enclose an angle of about 45° with the vertical. The scrapers are V-shaped and project into V-shaped corrugations of the roller. The scrapers co-operate with the rotating roller to shed mud, small clods of earth, stones and crop remnants, that would otherwise adhere to the roller at least until large earth clods are formed. Particularly for the preparation of seed beds large earth clods are of disadvantage.

The known machine is further provided with a lever mechanism by means of which the arms carrying the scrapers can be adjusted step by step about a pivotal axis that is disposed at the uppermost end of the arm.

With this known construction an adjustment of the arms in order to bring the scrapers nearer to or further away from the V-shaped and curved surface of the roller considerably effects the position of the scrapers with respect to the roller and thus their scraping action. When the scrapers are turned over just a small angle a change of orientation between the leading edges of the scrapers and the outer V-shaped surface of the roller occurs immediately. As a result of this, the tips of the V-shaped scrapers are not able to clean the most inward part of the V-shaped corrugations of the roller.

The known roller has further the disadvantage that when the scrapers wear off, a correct setting of the scrapers is not possible until the scrapers are weared off over a minimum length, as only in the latter case the lever mechanism can be locked in one of the discontinuously adjusted positions. During the time needed for reaching the minimum length of wear an optimum shedding of soil, stones and crop remnants cannot be achieved.

The present invention has for its object to provide a soil cultivating implement with a ground roller and scrapers, in which the foregoing disadvantages are avoided or at least greatly reduced.

To this end, the soil cultivating implement is characterized in that the ground roller is provided with cylindrical parts extending between the said radially protruding parts and that the working parts of the scrapers include an edge which is adapted to co-operate with the cylindrical parts of the ground roller, the implement being provided with means for stepless setting of the scrapers with respect to the roller.

With this so-called packer roller, the distance between the scrapers and the curved surface of the roller can be simply and accurately adjusted independent of the amount of wear. It is therefore always possible to maintain the scrapers in an optimum position relative to the roller.

In accordance with a first embodiment of the invention the means for setting the scrapers include a clamping bolt. In accordance with a further feature of the invention the clamping bolt is at or near the end of an arm that carries the roller, whereby the clamping bolt co-operates with an arcuate slot that is provided in the lever.

In accordance with a second embodiment of the invention the means for setting the scrapers include a screw-threaded spindle, whereby one end of the screw-threaded spindle is connected to the lever and the other end to an arm that is connected with the frame.

For a better understanding of the invention, and to show how the same may be carried into effect, reference will now be made, by way of example, to the accompanying drawings, in which:
Figure 1 is a plan view of a soil cultivating implement in accordance with the invention shown connected to the rear of an agricultural tractor;
Figure 2 is a section, to an enlarged scale, taken on the line II-II in Figure 1;
Figure 3 is a rear elevation as seen in the direction indicated by an arrow III in Figure 2;
Figure 4 is a plan view as seen in the direction indicated by an arrow IV in Figure 3;
Figure 5 is again a section, to an enlarged scale, taken on the line II-II in Figure 1 but illustrates an alternative construction of parts associated with a ground roller of the implement;
Figure 6 is a rear view as seen in the direction indicated by an arrow VI in Figure 5;
Figure 7 is another section, to an enlarged scale, taken on the line II-II in Figure 1 but illustrates a third embodiment of parts associated with the ground roller of the implement;
Figure 8 is a rear view as seen in the direction indicated by an arrow VIII in Figure 7.

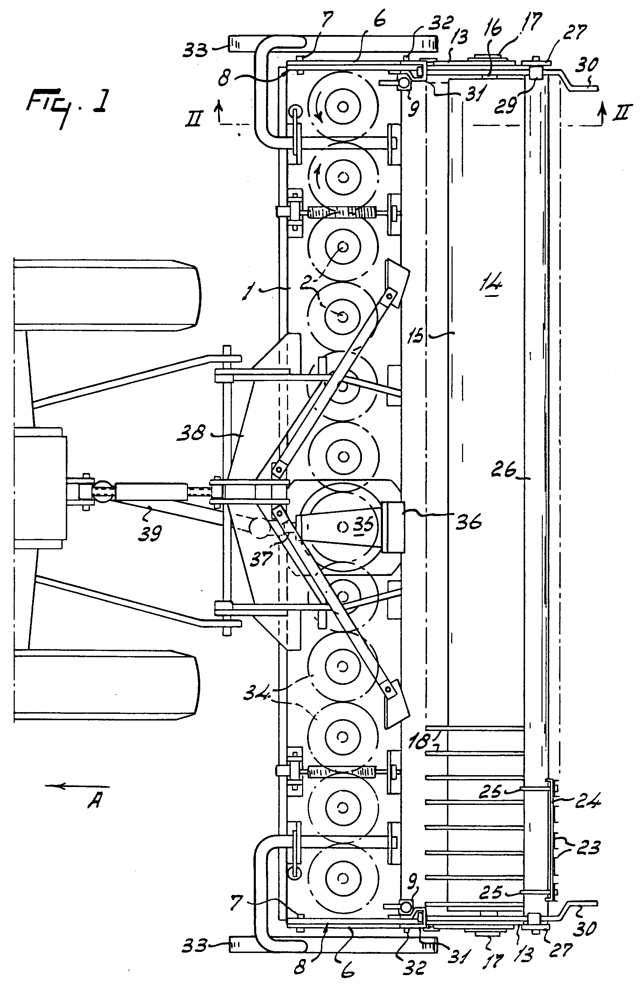

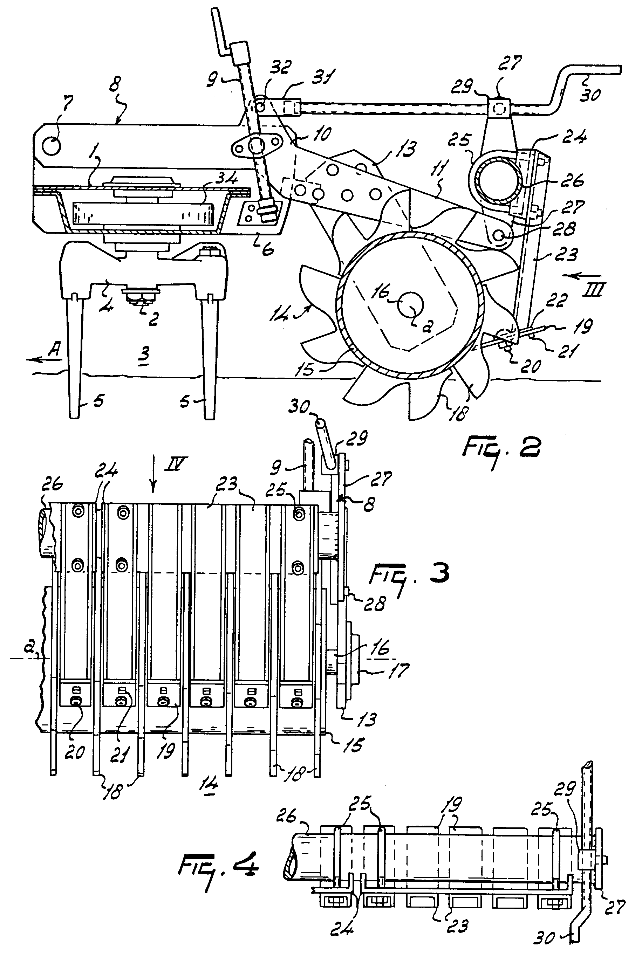

Referring to the accompanying drawings and firstly to Figures 1 to 4 thereof, the soil cultivating implement that is illustrated is in the form of a rotary harrow that is intended principally, but not exclusively, for use in the preparation of seed beds in previously worked soil. The implement has a hollow box-section frame portion 1 of elongate configuration that extends substantially horizontally transverse, and usually, as illustrated substantially horizontally perpendicular, to the intended direction of operative travel of the implement that is indicated in Figures 1 and 2 of the drawings by an arrow A. A plurality, of which there are twelve in the example that is being described, of substantially vertical, or at least upwardly extending, shafts 2 are rotatably mounted in bearings carried by upper and lower walls of the hollow frame portion 1 so as to lie in a single row with their parallel longitudinal axis/axes of rotation spaced apart from one another at equal distances which very advantageously, but not essentially, have magnitudes of substantially 25 centimetres. Each shaft 2 projects downwardly from beneath the bottom of the hollow frame portion 1 and the downwardly projecting portion thereof is splined or otherwise keyed and has a corresponding soil working member that is generally indicated by the reference 3 firmly but releasably secured to it by means which include a washer, a nut co-operating with a short screw-threaded lowermost end region of the shaft 2 concerned and a split pin or other known means arranged to prevent the nut from working loose. Each soil working member 3 comprises a substantially horizontally disposed carrier 4 which has two substantially symmetrically identical arms that project more or less radially outwards from a hub thereof that is secured to the downwardly projecting portion of the corresponding shaft 2. The outer ends of the two arms of each carrier 4 define corresponding sleeve-like holders in which upper fastening portions of two soil working tools in the form of rigid metallic tines 5 are firmly but releasably secured with the aid of nuts (see Figure 2) which co-operate with upper screw-threaded regions of the fastening portions thereof.

The opposite ends of the hollow frame portion 1 are closed by corresponding side plates 6 that extend substantially vertically parallel to one another and to the direction A, each side plate 6 being generally rectangular in shape (see Figure 2) and carrying, at its upper leading corner with respect to the direction A, a strong pivot 7 that is substantially horizontally parallel to the row of soil working members 3, the two pivots 7 being in alignment. The leading end of an arm 8 is mounted on each pivot 7 so as to be upwardly and downwardly turnable about the substantially horizontal axis defined by the two pivots 7 and in such a way that the arm extends generally rearwardly from the corresponding pivot 7 alongside that surface of the respective plate 6 which faces the centre of the implement.

An adjustment mechanism 9 interconnects each arm 8 and the neighbouring frame portion side plate 6 at a location close to the curved rear edge of that side plate 6, one of the two mechanisms 9 being clearly visible in Figure 2 of the drawings from which it will be seen that said mechanism comprises a straight screw-threaded spindle having a manually operable crank handle at its upper end, a bracket secured to the side plate 6 concerned, means connecting a lowermost unthreaded end region of the spindle to said bracket in such a way that the spindle is rotatable relative to the bracket without being significantly axially displaceable with respect thereto and, finally, a block turnably connected to the corresponding arm 8 and being formed with a transverse internally screw-threaded bore through which the matchingly screw-threaded spindle extends. The block that has just been mentioned is turnable relative to the corresponding arm 8 and the lowermost unthreaded end of the spindle is turnable about a horizontal axis relative to the bracket carried by the corresponding side plate 6 and it will be apparent that, upon rotating the spindle in either direction, the arm 8 will be turned either upwardly or downwardly about the axis defined by the aligned pivots 7 relative to the frame portion 1 and the soil working members 3 which it rotatably carries. The construction of each adjustment mechanism 9 is such that the angular displacement of the corresponding arm 8 is infinitely variable between fixed limits.

A rear end region of each arm 8 integrally joins an obliquely downwardly and rearwardly inclined portion 10 in the region of the corresponding adjustment mechanism 9 and that portion 10, in turn, integrally joins a less steeply downwardly and rearwardly inclined portion 11 that is of gently tapering upright width from the inclined portion 10 to its rearmost free end. Each arm portion 11 has firmly but releasably secured to it, just rearwardly of its junction with the corresponding inclined portion 10, the upper end of a downwardly and rearwardly inclined roller support 13, it being noted that the front of the upper end of each support 13 is also provided with a guide clamp which includes a portion that overlaps the curved rear edge of the corresponding frame portion side plate 6 in such a way as to provide guidance designed to prevent lateral deviation and in such a way that a bolt incorporated therein can be tightened, when required, to clamp the arm assembly 8, 10, 11 firmly but releasably to the associated side plate 6 to relieve the corresponding adjustment mechanism 9 of most of the stress which it would otherwise be subject to during the use of the implement. A ground roller that is generally indicated by the reference 14 is mounted in a freely rotatable manner between lowermost and rearmost end regions of the two supports 13, said roller 14 having substantially horizontally aligned stub shafts 16 at its opposite ends which stub shafts 16 are rotatably received in horizontally aligned bearings arranged in corresponding housings 17 (Figures 1 and 3), the common longitudinal axis of the two stub shafts 16 being the intended axis of rotation a of the roller 14. The roller 14 is, in the embodiment that is being described, a so-called "packer" roller and comprises a hollow cylinder 15 of circular cross-section whose longitudinal axis coincides with the axis a that has just been mentioned. Preferably, but not essentially, the external diameter of the roller cylinder 15 has a magnitude of not less than 20 centimetres and not more than 30 centimetres. The external surface of the cylinder 15 is provided, at regularly spaced apart intervals along its length, with a plurality of groups or crowns of teeth 18, each group or crown being contained in a corresponding substantially vertical plane that is perpendicular to the axis a but parallel or substantially parallel to the direction A and to each of the other groups or crowns. Each group or crown comprises ten of the teeth 18, the latter being formed in integral pairs (see Figure 2) and each pair being spot-welded or otherwise rigidly secured to the outer surface of the cylinder 15.

A scraper 19 is arranged between each successively neighbouring pair of groups or crowns of teeth 18 at the rear of the roller cylinder 15 with respect to the direction A in order to keep the roller 14 as free as possible from adhering mud, other accumulations of soil, remnants of previous crops and other agricultural debris that, if not removed, would interfere with the action of the roller 14 and thus prevent the implement from forming a well crumbled seed bed having a gently but smoothly compacted surface. Each scraper 19 is in the form of an oblong plate and may advantageously be formed from metal or other strong material having some resiliency. Advantageously, as can be seen best in Figure 2 of the drawings, the leading edges, with respect to the direction A, of the scrapers 19 are arranged very close to, but just clear of actual contact with, the outer curved surface of the cylinder 15, between the groups or crowns of teeth 18, so that said scrapers 19 will not impede rotation of the roller 14 except, momentarily, to a small extent when a stubborn clod of soil, jammed stone or the like is dislodged. The locations at which the leading ends of the scrapers 19 are very close to the outer surface of the roller cylinder 15 are spaced perpendicularly beneath an imaginary horizontal plane containing the axis a by a distance which is not less than 1/6 of the outer diameter of the cylinder 15.

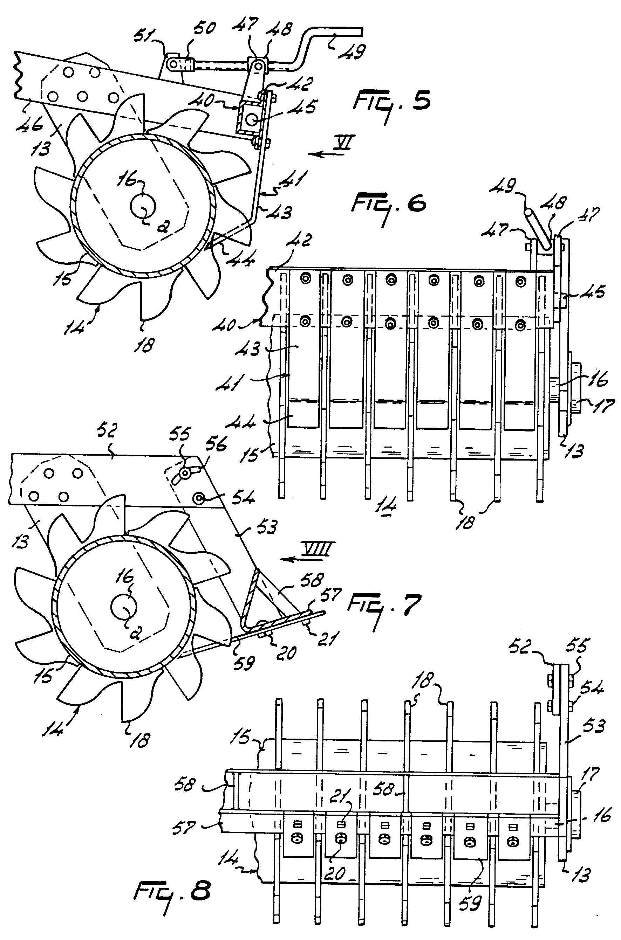

Each scraper 19 is adjustably fastened to the lower surface of a corresponding foot 22 by a securing bolt 20 and a locating pin 21 and its general plane is inclined downwardly and forwardly, with respect to the direction A, relative to a horizontal plane at an angle of substantially 20°. The bolts 20 and pins 21 are entered through longitudinal slots in the scrapers 19, in order that inevitable wear of the leading edge of each scraper 19 may be compensated for by lengthwise adjustment, and the construction and arrangement are such that, eventually, each scraper 19 can be reversed in position, end-for-end, to present a fresh unworn leading end to the roller cylinder 15, thus substantially doubling the useful life of that scraper 19 before simple and inexpensive replacement thereof finally becomes unavoidable. Each foot 22 is obliquely secured to the lowermost end of a corresponding upwardly and very slightly rearwardly inclined arm 23, it being seen from Figures 1 and 4 of the drawings that each arm 23 is of channel-shaped cross-section and is so arranged that the limbs of the channel project rearwardly, with respect to the direction A, from the leading web or base thereof. The scrapers 19 are arranged in groups of five by fastening upper end regions of the corresponding five arms 23 to a common support 24. Each common support 24 is bent-over forwardly, at its opposite ends (see Figure 4), those opposite ends being provided with forwardly facing concave recesses which fit the outer surface of a tubular carrier 26, of circular cross-section, that extends substantially horizontally perpendicular to the direction A throughout the combined working width of the twelve soil working members 3. Each common support 24 is formed, adjacent the forwardly bent-over opposite ends thereof, with upper and lower holes which holes receive the limbs of corresponding U-bolts 25 so that there are two U-bolts 25 per common support 24, the bolts 25 clampingly embracing the tubular carrier 26 and being arranged so that their screw-threaded opposite ends are located between the limbs of corresponding ones of the arms 23 where they co-operate with clamping nuts that are protected from dirt and damage by the limbs of the arms 23.

Each end of the tubular carrier 26 that extends substantially horizontally parallel to the axis of rotation a of the roller 14 is provided with corresponding diametrically opposed upwardly and downwardly directed lugs 27. Each lower lug 27 is pivotally connected, by a corresponding horizontal pivot pin 28, to the rearmost end of the rear portion 11 of the corresponding arm 8, said pivot pin 28 defining an axis which is parallel to the axis of rotation a of the roller 14. The top of each upwardly projecting lug 27, on the other hand, is turnably connected by a further parallel pivot to a block 29 formed with an internally screw-threaded transverse bore. This bore receives the matchingly screw-threaded shank of a spindle 30, that is more or less horizontally parallel to the direction A, and that has a manually operable crank handle at its rearmost end. The leading end of each spindle 30 is rotatably but axially immovably received in a socket forming the base of a fork 31 whose limbs are connected, by a further pivot pin 32 that is substantially parallel to the axis a, to an integral upward projection at the junction between the leading end of the inclined portion 10 of the corresponding arm and the rearmost end of that arm 8, proper.

As seen in plan view, the longitudinal axes of the pins 28 that pivotally connect the tubular carrier 26 to the arm portions 11 are located rearwardly, with respect to the direction A, of the top of the roller cylinder 15, said pivotal axes being co-incident or substantially co-incident when the implement is in use and being located at substantially the same horizontal level as are the mid-points of the arms 23 that lie just behind them with respect to the direction A, so that the axis afforded by pins 28 lies above the said scrapers 19 in a vertical plane that intersects the scrapers 19. It will be apparent that manual rotation of the spindles 30, from the rear of the implement, will turn the tubular carrier 26 and thus all of the scrapers 19 about the substantially co-incident axes afforded by the pins 28 in such a way that the leading ends or edges of the scrapers 19 are moved either closer to, or further away from, the outer curved surface of the roller cylinder 15. Thus, all of the scrapers 19 can be simply and accurately adjusted, in common, relative to the roller 14 so that they will occupy substantially optimum positions relative to the roller cylinder 15.

Two shield plates 33 that, during operation, extend substantially vertically parallel to one another and to the direction A lie immediately beyond the opposite ends of the single row of rotary soil working members 3 and function principally to co-operate with the neighbouring soil working members 3 at the opposite ends of said row in cultivating the soil to substantially the same thorough extent as is produced by the co-operation between neighbouring pairs of members 3 at locations closer to the centre of the implement. In addition, however, the shield plates 33 prevent the rapidly moving tines 5 of the soil working members 3 from flinging stones and other hard objects laterally of the path of travel of the implement so that the danger of damage or injury that might otherwise be caused in this way is very greatly reduced, if not entirely eliminated. Each shield plate 33 is carried by a corresponding single arm having a portion that is mounted on top of the hollow frame portion 1, at a short distance inwardly from the neighbouring end of that frame portion, so as to be turnable about a substantially horizontal axis that is substantially parallel to the direction A. This enables each shield plate 33, whose lowermost edge is shaped to slide forwardly over the ground surface, to turn upwardly and downwardly to match undulations in the ground that may be met with during operative progress in the direction A and also allows each shield plate to be turned upwardly and inwardly through substantially 180° so that it can occupy an inoperative transport position in which it is inverted on top of the hollow frame portion 1.

Each shaft 2 is provided, inside the hollow frame portion 1, with a corresponding straight- or spur-toothed pinion 34, the size of each pinion 34 being such that its teeth are in mesh with those of the or each neighbouring pinion 34 in the single row, in this embodiment, of twelve such pinions 34. Due to this inter-meshing relationship between the pinions 34, each shaft 2, soil working member 3 and pinion 34 will revolve in the opposite direction to the or each immediately neighbouring similar assembly, these directions of rotation being indicated for two such assemblies at the top of Fig. 1 of the drawings.

One of the centre pair of shafts 2 in the single row of twelve such shafts has an upward extension through the top of the hollow frame portion 1 into a gearbox 35 that is firmly secured to the top of said frame portion 1 by bolts. Shafts and bevel pinions inside the gearbox 35 place the upward shaft extension that has just been mentioned in driven connection with a rotary input shaft 37 of the gearbox whose leading splined or otherwise keyed end projects forwardly in substantially the direction A from the front thereof where it can be placed in driven connection with the rear power take-off shaft of an agricultural tractor or other operating vehicle through the intermediary of a telescopic transmission shaft 39, which is of a construction that is known per se, having universal joints at its opposite ends. The rear of the gearbox 35, with respect to the direction A, is provided with a change-speed gear 36 whose construction and operation are not the subject of the present invention. It suffices to say that, beneath a readily removable cover of the change-speed gear 36, two splined or otherwise keyed shaft ends are accessible and carry the matchingly internally splined or otherwise keyed hubs of a pair of inter-meshing straight- or spur-toothed pinions to give a pre-determined transmission ratio between the two shafts concerned. The two pinions can be interchanged in position on the shaft ends, or can be exchanged for at least one other pair of co-operating pinions of different sizes, to give any chosen one of a number of different transmission ratios thus enabling the rotary soil working members 3 to be revolved at any chosen one of a number of different speeds without having to alter the speed of driving rotation that is applied to the forwardly projecting rotary input shaft 37 of the gearbox 35.

The top and front of the hollow frame portion 1, with respect to the direction A, is provided with a coupling member or trestle 38 that is of substantially isosceles triangular configuration as seen in either front or rear elevation and this coupling member or trestle 38 is constructed and arranged to connect the implement to a three-point lifting device or hitch at the rear of the agricultural tractor or other vehicle which is both to move the implement forwardly in the direction A and to operate its soil working members 3. The coupling member or trestle 38 and the three-point lifting device or hitch may both be of a known kind and the arrangement that has just been described is illustrated somewhat diagrammatically in Fig. 1 of the drawings. Locations at substantially the apex of the coupling member or trestle 38 are strengtheningly connected by steeply downwardly and rearwardly divergent tie beams to widely spaced-apart locations at the top and rear of the hollow frame portion 1.

In the use of the soil cultivating implement that has been described in forming a seed bed or otherwise cultivating the ground, its coupling member or trestle 38 is connected to the three-point lifting device or hitch at the rear of the agricultural tractor or other vehicle that is to move and operate the implement and the rotary input shaft 37 of the implement gearbox 35 is placed in driven connection with the rear power take-off shaft of the same tractor or other vehicle using the known telescopic transmission shaft 39 that has universal joints at its opposite ends. Adjustments that may, if necessary, be made before work commences include setting the maximum depth to which the tines 5 of the soil working members 3 will be able to penetrate into the ground by raising or lowering the bodily level of the ground roller 14 relative to that of the frame portion 1 and soil working members 3 using the two adjusting mechanisms 9 to change that bodily level. The transmission ratio established in the change-speed gear 36 may also, if required, be altered to bring about a faster or slower speed of rotation of the soil working members 3. These adjustments will usually be made in the light of the nature and condition of the soil that is to be cultivated by the implement and the particular purpose for which that soil is required after its cultivation. As the implement moves operatively in the direction A, each soil working member 3 will work a corresponding strip of soil that extends in the same direction and, since the effective working width of each member 3 is the same as, or a little greater than, the distance between the axes of rotation of neighbouring members 3, these individual strips will overlap, or at least adjoin, one another to produce a single broad strip of worked soil extending in the direction A and having a width of substantially, although not necessarily exactly, three metres when the preferred dimensions that have been referred to above are employed. It will be apparent that a greater or smaller working width could be produced by employing a larger or smaller number of the rotary soil working members 3.

The so-called packer roller 14 which forms part of the implement that has been described by way of example is particularly advantageous when seed beds are to be prepared in soil that is somewhat heavy in nature. The teeth 18 of the roller 14 project into the soil when the implement is in use and cause the roller 14 to be revolved around its own axis a. The outer curved surface of the roller cylinder 15 gently compresses the soil that has immediately previously been crumbled by the tines 5 of the members 3 and thus the freshly worked soil is gently consolidated into a seed bed whose structure is substantially optimum for the subsequent sowing and later germination of seeds.

As briefly mentioned above, the scrapers 19 co-operate with the surface of the roller cylinder 15, between the groups or crowns of teeth 18, in preventing any significant accumulations of soil from occurring and particularly from becoming stuck between two groups or crowns of the roller teeth. The scrapers 19 are particularly effective in preventing large accumulations of earth from being released that might form clods which would be left to dry and harden on the ground thus spoiling the seed bed which the implement was producing. The particular construction and arrangement of the scrapers 19 that has been described enables soil to be directly shed from the roller cylinder 15 before any significant build-up thereof can occur, the ground-driven rotation of the roller 14, nevertheless, remaining undisturbed.

Despite the fact that the scrapers 19 do not normally directly contact the surface of the roller cylinder 15, inevitable wear slowly takes place and individual adjustment of seriously worn scrapers 19 will sometimes be necessary relative to the corresponding feet 22, using the corresponding bolts 20. It will also be remembered that each scraper 19 is reversable in position, end-for-end, to substitute a fresh unworn leading edge when the original leading edge has become worn down so far that further adjustment thereof with respect to the corresponding foot 22 is no longer possible.

A simple but very effective way of correctly positioning all of the scrapers 19 relative to the roller cylinder 15 is to employ the two spindles 30, by manipulation from the rear of the implement, to turn the lever mechanism, which comprises the pairs of lugs 27, about the substantially aligned pivots 28 to bring the leading ends or edges of the scrapers 19 either closer to, or further away from, the surface of the roller cylinder 15. The adjustment is infinately variable so that a very fine variation can, when required, be made and this is particularly important when the implement has a large working width so that the ground roller 14 is of correspondingly large axial length.

Figs. 5 and 6 of the drawings correspond to Figs. 2 and 3 thereof but illustrate an alternative embodiment in which, however, parts that are similar or identical to parts which have already been described above are indicated by the same references as are employed in the preceding Figures of drawings and will not be described again in detail.

In this embodiment, a carrier 40 of channel-shaped cross-section replaces the circular cross-section carrier 26, the carrier 40 having perpendicularly bent-over rims at the free edges of its limbs and those rims being secured to a co-operating closing plate 42, and to the upper ends of scraper portions 43, by upper and lower bolts. The limbs of the carrier 40 project rearwardly from the foremost web or base thereof. In this embodiment, there are a plurality of relatively spaced identical scrapers 41 each of which may be formed from strong metal or other material which advantageously has some resiliency. Each scraper 41 comprises the aforementioned upper portion 43 that projects downwardly and forwardly, with respect to the direction A, at a few degrees to the vertical from the carrier 40, said portion 43 being integrally joined by a bend enclosing an obtuse angle of substantially 120° to the upper end of a lower portion 44 whose lowermost extremity is arranged very close to, but preferably not in actual contact with, the surface of the roller cylinder 15 between a corresponding pair of groups or crowns of teeth 18. The two portions 43 and 44 of each scraper 41 are both flat and are therefore straight-edged as seen in Figure 5 of the drawings. The bends which integrally interconnect the two portions 43 and 44 of each scraper 41 lie at a horizontal level which is just below that of the axis of rotation a of the roller 14. Once again, the locations at which the lower leading ends of the scraper portions 44 are very close to the curved surface of the roller cylinder 15 are all at a level which is spaced beneath that of an imaginary horizontal plane containing the axis a by a distance which is substantially one sixth of the external diameter of the roller cylinder 15. The lower portion 44 of each scraper 41 is downwardly and forwardly inclined, with respect to the direction A, at an angle of substantially 35° to an imaginary horizontal plane containing the axis of rotation a.

The opposite ends of the carrier 40 are provided with corresponding pivotal stub shafts 45 that are substantially horizontally aligned in parallel relationship with the roller axis a and these stub shafts 45 are turnably connected to arms 46, equivalent to the portions 11 of the previously described arms 8, at substantially the rearmost ends of those arms 46 with respect to the direction A. The opposite ends of the carrier 40 are symmetrically provided with corresponding pairs of upwardly projecting lugs 47 and, between each such pair of lugs 47, a respective block 48 is turnably mounted by way of a pair of trunnion pins which define an axis that is parallel to the roller axis a.

Each block 48 is formed with a transverse internally screw-threaded bore and that bore receives the matchingly externally screw-threaded shaft of a spindle 49 which has a manually operable crank handle at its rear end and which extends more or less horizontally parallel to the direction A.

The leading unthreaded end of each spindle 49 is rotatably, but substantially axially immovably, received in the web or base of a corresponding fork 50 whose limbs are turnably connected, by a pin that is parallel to the roller axis a, to a lug 51 which projects upwardly from the upper edge of the arm 46 concerned at a location spaced forwardly along that arm from the rearmost end thereof. Once again, the lever mechanism that is afforded principally by the two upwardly projecting pairs of lugs 47 enables the carrier 40 and the scrapers 41 that are secured thereto to be turned angularly about the axis defined by the stub shafts 45 to a very accurate and infinitely variable extent so that all of the scrapers 41 can be simultaneously adjusted in position relative to the roller cylinder 15. The axis that is afforded by the stub shafts 45 extends substantially horizontally parallel to the roller axis a at a location which is to the rear of the roller cylinder 15, with respect to the direction A, and at a horizontal level which is a little above, and therefore substantially at, the level of the top of that cylinder 15 at any instant during its rotation.

Figures 7 and 8 of the drawings illustrate a further embodiment in which the rear ends of symmetrically identical arms 52, that correspond to the arms 46 and to the arm portions 11, have downwardly and rearwardly inclined support arms 53 connected to them so as to be turnable relative to the arms 52 about corresponding substantially horizontally aligned pivot bolts 54 which pivot bolts 54 define an axis that is parallel or substantially parallel to the roller axis a. Each support arm 53 is formed, above the corresponding pivot bolt 54, with an arcuate slot 56 whose centre of curvature co-incides with the axis defined by the corresponding bolt 54 and a clamping bolt 55 is entered through a hole in the overlapping arm 52 and through the slot 56. The lever mechanism that is afforded by the support arms 53 can be turned angularly in either direction to any required extent about the axis defined by the pivot bolts 54, once the clamping bolts 55 have been loosened, and any desired angular position that may be obtained can be maintained for as long as may be required merely by tightening the clamping bolts 55 and also the pivot bolts 54.

The lowermost and rearmost ends of the support arms 53 are rigidly interconnected by a carrier 57 which is substantially V-shaped as seen in cross-section (Fig. 7). Stays 58 strengtheningly interconnect the two limbs of the carrier 57 at intervals along the length thereof and, again as seen in cross-section, the two limbs of the carrier 57 and one of the stays 58 together define a substantially equilateral triangular figure (see Fig. 7) since the two limbs of the carrier 57 are inclined to one another at an angle of substantially 60°. The lower surface of the carrier 57 is inclined downwardly and forwardly from front to rear, with respect to the direction A, and has a plurality of flat scrapers 59 firmly but individually adjustably secured to it with the aid of the previously mentioned bolts 20 and pins 21. As in the first embodiment, each scraper 59 is in the form of a substantially oblong plate that is preferably formed from metal or some other strong material having some degree of resiliency. Once again, when the initial leading edge of any scraper 59 has become worn away to such an extent that further adjustment of that scraper relative to the carrier 57 is not possible, the scraper 59 concerned can be released from the carrier 57 and, after being turned through 180°, end-for-end, relative thereto, it can be re-connected to the support 57 presenting a fresh unworn leading edge to the roller cylinder 15, thus substantially doubling the life of the scraper 59 before inevitable wear eventually makes the simple and inexpensive replacement thereof essential to achieve effective soil-shedding from the roller. As mentioned above, simultaneous accurate positioning of all of the scrapers 59 relative to the roller cylinder 15 is accomplished by loosening the bolts 54 and 55 and angularly displacing the lever mechanism which comprises the support arms 53 about the axis defined by the pivot bolts 54 until the required disposition of the scrapers 59 is achieved. It is then only necessary to re-tighten the pivot bolts 54 and clamping bolts 55.

## Claims

1. A soil cultivating implement comprising a profiled ground roller (14) with radially protruding parts (18) and a plurality of scrapers (19, 44, 59) which are located at the rear end of the roller (14) relative to the intended direction of operative travel (A) of the implement, which scrapers are active between said protruding parts (18) of the roller (14), the implement further comprising a lever mechanism (27, 47, 53) with a lever (27, 47, 53) which is rotatable about a pivotal axis (28, 45, 54) relative to the frame (1) of the implement and which carries said plurality of scrapers (19, 44, 59), said lever mechanism (27, 47, 53) further permitting said plurality of scrapers (19, 44, 59) in common to be moved either closer to or further away from the roller surface (15), characterized in that the ground roller (14) is provided with cylindrical parts extending between the said radially protruding parts (18) and that the working parts of the scrapers (19, 44, 59) include an edge which is adapted to co-operate with the cylindrical parts of the ground roller (14), the implement being provided with means (30, 49, 55) for stepless setting of the scrapers (19, 44, 59) with respect to the roller.

2. An implement as claimed in claim 1, characterized in that the means for setting the scrapers (59) include a clamping member (55).

3. An implement as claimed in claim 2, characterized in that the clamping member is a bolt (55) which is at or near the end of an arm (52) that carries the roller (14) and that the clamping bolt (55) co-operates with an arcuate slot (56) that is provided in the lever (53).

4. An implement as claimed in any one of the preceding claims, characterized in that the pivotal axis (54) around which the lever is pivotable is constituted by a pivot bolt (54) holding the lever and an arm, which is connected with the frame (1), together.

5. An implement as claimed in claim 1, characterized in that the means (30, 49) for setting the scrapers (19, 44) include a screw threaded spindle (30, 49).

6. An implement as claimed in claim 5, characterized in that one end of the screw threaded spindle (30, 49) is connected to the lever (27, 47) and the other end to an arm (11, 46) connected with the frame (1).

## Patentansprüche

1. Bodenbearbeitungsgerät mit einer profilierten Bodenwalze (14), die radial nach außen ragende Teile (18) und mehrere Abstreifer (19, 44, 59) aufweist, die relativ zur Arbeitsrichtung (A) des Gerätes an der Rückseite der Walze (14) angeordnet und zwischen den nach außen ragenden Teilen (18) der Walze (14) wirksam sind, wobei das Gerät ferner einen Hebelmechanismus (27, 47, 53) mit einem Hebel (27, 47, 53) aufweist, der relativ zu dem Gestell (1) des Gerätes um eine Schwenkachse (28, 45, 54) schwenkbar ist und die Abstreifer (19, 44, 59) trägt, und wobei der Hebelmechanismus (27, 47, 53) eine gemeinsame Verstellung der Abstreifer (19, 44, 59) näher an die Walzenmantelfläche (15) oder weiter von ihr weg ermöglicht,
dadurch gekennzeichnet, daß die Bodenwalze (14) zylindrische Abschnitte aufweist, die sich zwischen den radial nach außen ragenden Teilen (18) erstrecken, und daß die Arbeitsteile der Abstreifer (19, 44, 59) eine Kante aufweisen, die derart ausgebildet ist, daß sie mit den zylindrischen Abschnitten der Bodenwalze (14) zusammenwirkt, und daß das Gerät mit einer Vorrichtung (30, 49, 55) zum stufenlosen Einstellen der Abstreifer (19, 44, 59) in bezug auf die Walze versehen ist.

2. Gerät nach Anspruch 1,
dadurch gekennzeichnet, daß die Vorrichtung zum Einstellen der Abstreifer (59) ein Klemmglied (55) aufweist.

3. Gerät nach Anspruch 2,
dadurch gekennzeichnet, daß das Klemmglied ein Bolzen (55) ist, der an oder nahe dem Ende eines Armes (52) angeordnet ist, der die Walze (14) trägt, und daß der Klemmbolzen (55) mit einem bogenförmigen Schlitz (56) zusammenwirkt, der in dem Hebel (53) vorgesehen ist.

4. Gerät nach einem der vorhergehenden Ansprüche,
dadurch gekennzeichnet, daß die Schwenkachse (54), um die der Hebel schwenkbar ist, durch einen Schwenkbolzen (54) gebildet ist, der den Hebel und einen mit dem Gestell (1) verbundenen Arm zusammenhält.

5. Gerät nach Anspruch 1,
dadurch gekennzeichnet, daß die Vorrichtung (30, 49) zum Einstellen der Abstreifer (19, 44) eine Gewindespindel (30, 49) aufweist.

6. Gerät nach Anspruch 5,
dadurch gekennzeichnet, daß ein Ende der Gewindespindel (30, 49) mit dem Hebel (27, 47) und das andere Ende mit einem mit dem Gestell (1) verbundenen Arm (11, 46) verbunden ist.

## Revendications

1. Machine pour cultiver le sol comprenant un rouleau de sol (14) profilé avec des parties (18) saillantes radialement et une pluralité de racleurs (19, 44, 59) qui sont situés à l'arrière du rouleau (14) par rapport au sens de marche (A) prévu pour le travail de la machine, lesquels racleurs sont actifs entre lesdites parties saillantes (18) du rouleau (14), la machine comprenant en outre un mécanisme à levier (27, 47, 53) avec un levier (27, 47, 53) qui est rotatif autour d'un axe de pivotement (28, 45, 54) par rapport au châssis (1) de la machine et qui porte ladite pluralité de racleurs (19, 44, 59), ledit mécanisme à levier (27, 47, 53) permettant en outre de rapprocher ou d'éloigner collectivement ladite pluralité de racleurs (19, 44, 59) de la surface (15) du rouleau,
**caractérisée** en ce que le rouleau de sol (14) est muni de parties cylindriques s'étendant entre lesdites parties (18) saillantes radialement, et en ce que les parties travaillantes des racleurs (19, 44, 59) comportent un bord qui est adapté pour coopérer avec les parties cylindriques du rouleau de sol (14), la machine étant munie de moyens (30, 49, 55) pour le réglage continu des racleurs (19, 44, 59) par rapport au rouleau.

2. Machine selon la revendication 1, caractérisée en ce que les moyens de réglage des racleurs (59) comportent un organe de bridage (55).

3. Machine selon la revendication 2, caractérisée en en ce que l'organe de bridage est un boulon (55) qui est à l'extrémité d'un bras (52) ou près de celle-ci, ce bras portant le rouleau (14), et en ce que le boulon de bridage (55) coopère avec une encoche arquée (56) qui est prévue dans le levier (53).

4. Machine selon l'une quelconque des revendications précédentes, caractérisée en ce que l'axe de pivotement (54) autour duquel peut pivoter le levier est constitué par un boulon-pivot (54) tenant ensemble le levier et un bras qui est relié au châssis (1).

5. Machine selon la revendication 1, caractérisée en ce que les moyens (30, 49) pour régler les racleurs (19, 44) comportent une tige filetée (30, 49).

6. Machine selon la revendication 5, caractérisée en ce qu'une extrémité de la tige filetée (30, 49) est reliée au levier (27, 47) et l'autre extrémité à un bras (11, 46) relié au châssis (1).
